# EUROPEAN PATENT APPLICATION

(11) **EP 4 836 167 A1**
(43) Date of publication of application: **04.11.2026**
(21) Application number: 24912693.9
(22) Date of filing: 23.12.2024
(51) Int. Cl.: H01M 50/531, H01M 4/134, H01M 4/38, H01M 10/04, H01M 10/0587, H01M 50/107, H01M 50/152, H01M 50/167, H01M 50/538, H01M 10/052

(54) **CYLINDRICAL SECONDARY BATTERY**

(30) Priority: 26.12.2023 JP 2023219286
(71) Applicant: Panasonic Intellectual Property Management Co., Ltd., Kadoma-shi, Osaka 571-0057 (JP)
(72) Inventor: ISHIGURO, Tasuku, Kadoma-shi, Osaka 571-0057 (JP); YOSHINARI, Rina, Kadoma-shi, Osaka 571-0057 (JP)
(74) Representative: Novagraaf International SA
(86) International application number: PCT/JP2024/045343
(87) International publication number: WO 2025/142806

(57) **Abstract**

A positive electrode (11) has one or more positive electrode core exposed parts (35) which are adjacent to a positive electrode mixture layer (32) in the positive electrode width direction, and in which a positive electrode core (30) is exposed. Positive electrode tabs (20) are bonded one by one to the positive electrode core exposed parts (35). In the positive electrode core exposed parts (35), edges (37) adjacent to the positive electrode mixture layer (32) in the positive electrode width direction include a longitudinally extended edge (37a) extending substantially parallel to the positive electrode longitudinal direction. With regard to at least one of the positive electrode core exposed parts (35), when the elongation rate in the positive electrode longitudinal direction of the longitudinally extended edge (37a) after 100 charge-discharge cycles from a reference time is x%, the distance in the positive electrode width direction between the positive electrode tab (20) and the longitudinally extended edge (37a) is a mm, and the maximum length of the positive electrode core exposed part (35) in the positive electrode width direction is b mm, x ≥ 1% and a/b ≥ 2-3/(2x) hold.

## Description

### TECHNICAL FIELD

The present disclosure relates to a cylindrical secondary battery.

### BACKGROUND ART

Among conventional cylindrical secondary batteries, there is a cylindrical secondary battery disclosed in PATENT LITERATURE 1. This cylindrical battery comprises an electrode assembly of an elongated positive electrode and an elongated negative electrode that are wound with a separator interposed therebetween, a housing can that houses the electrode assembly, and a sealing assembly with which an opening on one side of the housing can in a height direction is capped. The positive electrode has an elongated positive electrode core and a positive electrode mixture layer disposed on the positive electrode core, and the negative electrode has an elongated negative electrode core and a negative electrode mixture layer disposed on the negative electrode core. A plurality of positive electrode tabs have respective one end portions joined to the positive electrode at an interval in a positive electrode longitudinal direction, and the respective other end portions joined to an inner surface of the sealing assembly. In this cylindrical battery, a current path in the positive electrode longitudinal direction is shortened, so that an electrical resistance can be reduced.

### CITATION LIST

### PATENT LITERATURE

PATENT LITERATURE 1: Japanese Unexamined Patent Application Publication No. 2003-7346

### SUMMARY

When a part of the positive electrode mixture layer is disposed to be adjacent, in a positive electrode width direction, to a positive electrode core exposed portion to which the positive electrode tab is joined, the capacity is increased and the battery performance is improved. However, as described in detail below, the present inventors have found that, when this configuration is adopted, damage is easily caused in the positive electrode core exposed portion around a corner in the joining portion in the positive electrode core exposed portion to which the positive electrode tab is joined and at the positive electrode mixture layer side in the positive electrode width direction. It is an advantage of the present disclosure to provide a cylindrical secondary battery that facilitates increases in capacity and reliability.

In order to solve the above-described problem, a cylindrical secondary battery according to the present disclosure comprises an electrode assembly of an elongated positive electrode and an elongated negative electrode that are wound with a separator interposed between the positive electrode and the negative electrode, a housing can that houses the electrode assembly and has a cylindrical portion, and a sealing assembly that is crimp-fixed to an opening portion of the housing can via a gasket, in which the positive electrode has an elongated positive electrode core, and a positive electrode mixture layer disposed on the positive electrode core, the negative electrode has an elongated negative electrode core, and a negative electrode mixture layer disposed on the negative electrode core, the positive electrode has one or more positive electrode core exposed portions, the positive electrode core exposed portions each being adjacent to the positive electrode mixture layer in a positive electrode width direction and exposing the positive electrode core, one positive electrode tab is joined to each of the positive electrode core exposed portions, a longitudinally extending edge that extends substantially in parallel to a positive electrode longitudinal direction is included in an edge of each of the positive electrode core exposed portions that is adjacent to the positive electrode mixture layer in the positive electrode width direction, and regarding at least one of the positive electrode core exposed portions, when an elongation rate of the longitudinally extending edge in the positive electrode longitudinal direction after 100 charge and discharge cycles are performed from a reference point of time is defined as x%, a distance in the positive electrode width direction between the positive electrode tab and the longitudinally extending edge is defined as a mm, and a maximum length of the positive electrode core exposed portion in the positive electrode width direction is defined as b mm, x ≥ 1%, and a/b ≥ 2 - 3/(2x) holds.

The above-described reference point of time may refer to any point of time after the cylindrical secondary battery is manufactured, and may be, for example, a point of time before a person uses a battery purchased after shipping, a point of time before a battery after manufacturing is preliminarily charged, or a point of time after preliminary charging of a battery to be performed after manufacturing and before shipping is completed. In this specification, as the conditions of the above-described cycle defined as the charge and discharge cycle, the temperature of the cylindrical secondary battery is set within the temperature range of 20°C to 45°C, OCV (voltage in a state in which a current does not flow in the battery) during charging is greater than or equal to 4.1 V, and the OCV during discharging is less than or equal to 3.5 V. A current value in charge and discharge may be any value.

According to the cylindrical secondary battery according to the present disclosure, increases in capacity and reliability are facilitated.

### BRIEF DESCRIPTION OF DRAWING

FIG. 1 is an axial sectional view of a cylindrical secondary battery according to one embodiment of the present disclosure.
FIG. 2 is a perspective view illustrating an electrode assembly and parts of positive electrode tabs.
FIG. 3 is a development illustrating a winding inner surface of a positive electrode, and a development for explaining, in the positive electrode, forming positions and structures of positive electrode core exposed portions to which the respective positive electrode tabs are joined.
FIG. 4 is an enlarged view around one positive electrode core exposed portion in FIG. 3.
FIG. 5 is an enlarged view corresponding to FIG. 4 in a cylindrical secondary battery of a reference example.
FIG. 6 is a diagram for explaining parameters defining a shape of the positive electrode core exposed portion.
FIG. 7 is an enlarged view corresponding to FIG. 4 in a cylindrical secondary battery of a first modification.
FIG. 8 is an enlarged view corresponding to FIG. 4 in a cylindrical secondary battery of a second modification.

### DESCRIPTION OF EMBODIMENTS

Hereinafter, an embodiment of a cylindrical battery according to the present disclosure will be described in detail with reference to the drawings. The cylindrical secondary battery of the present disclosure may be a battery using an aqueous electrolyte, or may be a battery using a non-aqueous electrolyte. In the following, a cylindrical lithium ion secondary battery using a non-aqueous electrolyte will be exemplified as a cylindrical secondary battery 10 of one embodiment, but the cylindrical secondary battery of the present disclosure is not limited to this.

In a case where a plurality of embodiments and modifications and the like are included in the following description, it is assumed from the beginning that a new embodiment is constructed by appropriately combining those feature portions. In the following embodiments, the same components are denoted by the same reference numerals in the drawings, and duplicate descriptions are omitted. Schematic diagrams are included in a plurality of the drawings, and the dimensional ratios such as lengths, widths and heights of each member between different drawings are not necessarily the same. In this specification, a sealing assembly 17 side in an axial direction (height direction) of the cylindrical secondary battery 10 is defined as "upper", and a bottom 68 side of a housing can 16 in the axial direction is defined as "lower".

In this specification, the number of turns is defined as follows. When viewing a cross section of the cylindrical battery in a round slicing direction (cross section including a radial direction of the cylindrical battery), a center of a circle formed by an outer diameter of the housing can is defined as a center of polar coordinates, and a winding inner end position of the positive electrode is defined as 0 degrees. At this time, when a change in angle when the angle is advanced from the winding inner end along the positive electrode is defined as θ, the formula θ ÷ 360 is defined as the number of turns. For example, the position advanced by 1080 degrees becomes 1080 ÷ 360 = 3.0 turns. Of the components described below, components that are not described in the independent claim indicating the highest level concept are arbitrary components, and are not essential components.

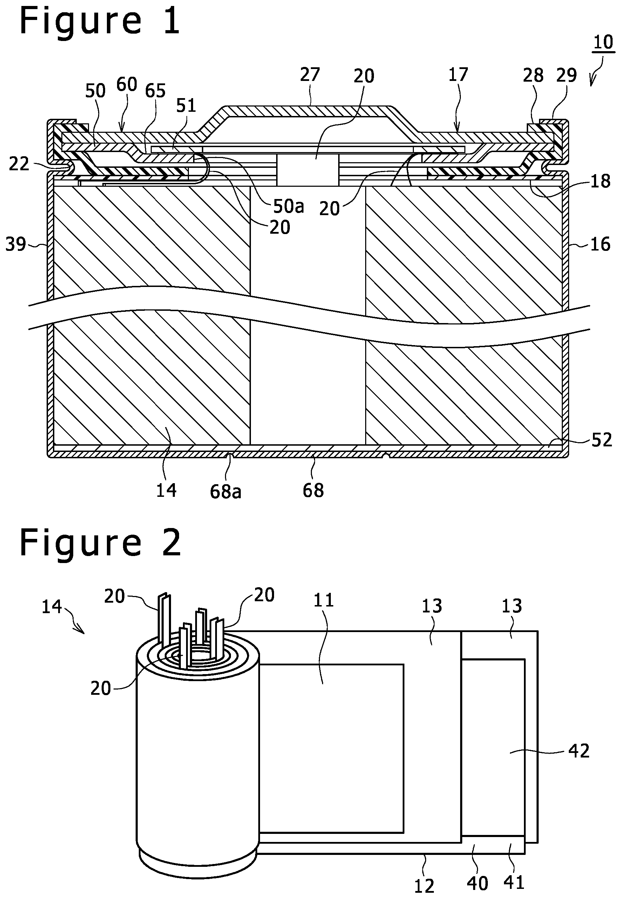

FIG. 1 is an axial sectional view of the cylindrical secondary battery 10 according to one embodiment of the present disclosure. As illustrated in FIG. 1, the cylindrical secondary battery (hereinafter, simply referred to as a battery) 10 comprises a wound-type electrode assembly 14, a non-aqueous electrolyte (not illustrated), a bottomed cylindrical metallic housing can 16 that houses the electrode assembly 14 and the non-aqueous electrolyte, and a sealing assembly 17 that is crimp-fixed to an opening portion of the housing can 16 via a gasket 28.

The non-aqueous electrolyte has ion conductivity (for example, lithium ion conductivity). The non-aqueous electrolyte may be a liquid electrolyte (electrolytic solution), or may be a solid electrolyte. The liquid electrolyte (electrolytic solution) includes a non-aqueous solvent, and an electrolyte salt dissolved in the non-aqueous solvent. For the non-aqueous solvent, for example, esters, ethers, nitriles, amides, mixed solvents containing two or more selected from the foregoing, and the like may be used. Examples of the non-aqueous solvent include ethylene carbonate (EC), ethyl methyl carbonate (EMC), dimethyl carbonate (DMC), diethyl carbonate (DEC), and mixed solvents containing the foregoing. The non-aqueous solvent may contain a halogen-substituted product (for example, fluoroethylene carbonate) obtained by substituting at least some of hydrogen atoms in these solvents with a halogen atom such as fluorine. For the electrolyte salt, a lithium salt such as LiPF₆ is used.

As the solid electrolyte, for example, a solid or gelled polymer electrolyte, or an inorganic solid electrolyte is used. The polymer electrolyte include, for example, a lithium salt and a matrix polymer, or a non-aqueous solvent, a lithium salt, and a matrix polymer. As the matrix polymer, for example, a polymer material which absorbs and gels the non-aqueous solvent is used. As the polymer material, for example, fluororesin, acrylic resin, polyether resin, or the like is used. As the inorganic solid electrolyte, for example, a material (for example, an oxide-based solid electrolyte, a sulfide-based solid electrolyte, or a halide-based solid electrolyte) known in an all-solid-state lithium ion secondary battery and the like is used.

FIG. 2 is a perspective view illustrating the electrode assembly 14 and parts of positive electrode tabs 20. As illustrated in FIG. 2, the electrode assembly 14 has an elongated positive electrode 11, an elongated negative electrode 12, and two elongated separators 13, and has a wound structure of the positive electrode 11 and the negative electrode 12 that are wound with two elongated separators 13 each interposed between the positive electrode 11 and the negative electrode 12. One or more positive electrode tabs 20 are joined to the positive electrode 11. A plurality of positive electrode tabs are preferably joined to the positive electrode 11 at an interval in the positive electrode longitudinal direction, and six or more positive electrode tabs 20 are more preferably joined to the positive electrode 11 at an interval in the positive electrode longitudinal direction. In the present embodiment, eight positive electrode tabs 20 are joined to the positive electrode 11.at an interval in the longitudinal direction.

The negative electrode 12 is formed to be one size larger than the positive electrode 11 in order to prevent precipitation of lithium. The negative electrode 12 is formed to be longer in the winding direction and the axial direction than the positive electrode 11. The two separators 13 are each formed to be one size larger than the positive electrode 11, and are disposed so as to interpose the positive electrode 11 therebetween. The separators 13 protrude upward from the positive electrode 11 and the negative electrode 12, and the negative electrode 12 protrudes downward from the positive electrode 11 and the separators 13.

The negative electrode 12 has a negative electrode core exposed portion 41 at a lower axial end portion extending from a winding inner end to a winding outer end in the longitudinal direction of the elongated negative electrode 12, the negative electrode core exposed portion 41 being not provided with a negative electrode mixture layer 42 in a negative electrode core 40. Therefore, the lower axial end portion of the electrode assembly 14 is formed of the negative electrode core exposed portion 41. The negative electrode 12 may include a winding inner end of the electrode assembly 14. However, in general, the separator 13 extends beyond the winding inner end of the negative electrode 12, and a winding inner end of the separator 13 serves as the winding inner end of the electrode assembly 14.

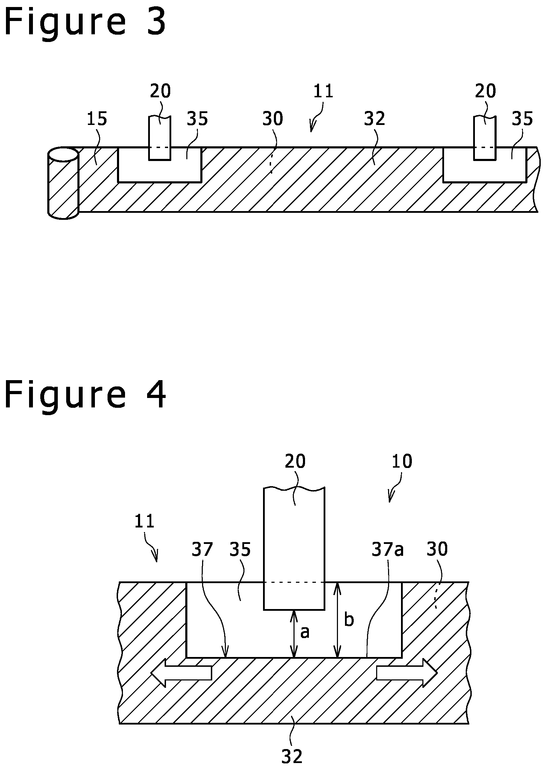

The positive electrode 11 has a positive electrode core 30 (see FIG. 3), and a positive electrode mixture layer 32 (see FIG. 3) formed on each surface of the positive electrode core 30. For the positive electrode core 30, a foil of metal such as aluminum or an aluminum alloy, which is stable within a potential range of the positive electrode 11, a film in which such a metal is disposed on a surface layer thereof, or the like can be used. The positive electrode mixture layer 32 includes a positive electrode active material, a conductive agent, and a binder. The positive electrode 11 can be produced by, for example, applying a positive electrode mixture slurry including a positive electrode active material, a conductive agent, a binder, and the like on a positive electrode core 30, drying the resulting coating film, and then compressing the coating film to form a positive electrode mixture layer 32 on each surface of the positive electrode core 30.

The positive electrode active material is composed of a lithium-containing metal composite oxide as a main component. Examples of metal elements contained in the lithium-containing metal composite oxide include Ni, Co, Mn, Al, B, Mg, Ti, V, Cr, Fe, Cu, Zn, Ga, Sr, Zr, Nb, In, Sn, Ta, and W. An example of a preferable lithium-containing metal composite oxide is a composite oxide containing at least one of the group consisting of Ni, Co, Mn and Al.

Examples of the conductive agent included in the positive electrode mixture layer 32 may include carbon materials such as carbon black such as acetylene black and Ketjenblack, and graphite. Examples of the binder included in the positive electrode mixture layer 32 may include fluororesins such as polytetrafluoroethylene (PTFE) and polyvinylidene fluoride (PVdF), polyacrylonitrile (PAN), polyimide resins, acrylic resins, and polyolefin resins. These resins may be used in combination with cellulose derivatives such as carboxymethyl cellulose (CMC) or a salt thereof, a polyethylene oxide (PEO), or the like. In order to increase the capacity, the length of the positive electrode 11 in the positive electrode longitudinal direction is preferably greater than or equal to 3000 mm.

FIG. 3 is a development illustrating a winding inner surface 15 of the positive electrode 11, and a development for explaining, in the positive electrode 11, forming positions and structures of positive electrode core exposed portions 35 to which the respective positive electrode tabs 20 are joined. In FIGS. 3 to 8, a region indicated by oblique hatching is an arrangement region of the positive electrode mixture layer 32. In the present embodiment, a case will be described where the positive electrode tabs 20 are joined to the winding inner surface 15 of the positive electrode 11, but the positive electrode tabs may be joined to a winding outer surface of the positive electrode.

As illustrated in FIG. 3, the positive electrode 11 has one or more positive electrode core exposed portions 35, each of which is adjacent to the positive electrode mixture layer 32 in a positive electrode width direction and exposes the positive electrode core 30, and in the present embodiment, the positive electrode 11 has eight positive electrode core exposed portions 35. One positive electrode tab 20 is joined to each of the positive electrode core exposed portions 35. A part of the positive electrode mixture layer 32 is disposed to be adjacent, in the positive electrode width direction, to the positive electrode core exposed portion 35, so that the capacity is increased. Since a current collecting path is easily shortened, the center positions of the eight positive electrode core exposed portions 35 in the longitudinal direction are preferably arranged with substantially equal intervals in the positive electrode longitudinal direction.

The positive electrode tab 20 is joined to the positive electrode core exposed portion 35 by means of ultrasonic welding, in a state in which the center position in its width direction substantially coincides with the center position of the corresponding positive electrode core exposed portion 35 in the longitudinal direction. The positive electrode tabs 20 are each covered with, for example, an insulating tape (not illustrated), so that a short circuit between the positive electrode 11 and the negative electrode 12 is reduced. The insulating tape preferably cover each of the positive electrode core exposed portions 35.

As illustrated in FIG. 2, the negative electrode 12 has the negative electrode core 40, and the negative electrode mixture layer 42 formed on each surface of the negative electrode core 40. For the negative electrode core 40, a foil of metal such as copper or a copper alloy, which is stable within a potential range of the negative electrode 12, a film in which such a metal is disposed on a surface layer thereof, or the like can be used. The negative electrode mixture layer 42 includes a negative electrode active material, and a binder. The negative electrode 12 can be produced by, for example, applying a negative electrode mixture slurry including a negative electrode active material, a binder, and the like on a negative electrode core 40, drying the resulting coating film, and then compressing the coating film to form a negative electrode mixture layer 42 on each surface of the negative electrode core 40.

As the negative electrode active material, a carbon material that reversibly occludes and releases lithium ions is generally used. A preferable carbon material is graphite including natural graphite such as flaky graphite, massive graphite, and earthy graphite, and artificial graphite such as massive artificial graphite and graphitized mesophase carbon microbeads. The negative electrode active material of the negative electrode mixture layer 42 preferably includes a silicon (Si) material containing Si particles, and a mass ratio of an Si element in the negative electrode mixture layer 42 is preferably greater than or equal to 5 mass%. For the negative electrode active material, a metal alloyed with lithium other than Si, an alloy containing such a metal, a compound containing such a metal, or the like may be used.

For the binder included in the negative electrode mixture layer 42, fluororesins, PAN, polyimide resins, acrylic resins, polyolefin resins, or the like may be used as in the case of the positive electrode 11, and a styrene-butadiene rubber (SBR) or a modification thereof is preferably used. In the negative electrode mixture layer 42, for example, in addition to SBR and the like, CMC or a salt thereof, polyacrylic acid (PAA) or a salt thereof, polyvinyl alcohol, or the like may be included.

A porous sheet having ion permeability and an insulation property is used for the separator 13. Specific examples of the porous sheet include a microporous thin film, a woven fabric, and a nonwoven fabric. The material of the separator 13 is preferably a polyolefin resin such as polyethylene or polypropylene, a cellulose, or the like. The separator 13 may be either a single layer structure or a laminated structure. A heat-resistant layer or the like may be formed on a surface of the separator 13.

As illustrated in FIG. 1, the battery 10 comprises an annular insulating plate 18 on an upper side of the electrode assembly 14. The positive electrode tab 20 attached to the positive electrode 11 extends toward the sealing assembly 17 side through a through hole in the insulating plate 18. The sealing assembly 17 has an upper current collecting plate 50, and a terminal cap 27. The upper current collecting plate 50 is a metallic annular plate member, and has a through hole 50a at a radial center portion.

The terminal cap 27 is a metallic plate member having no through hole, and is located on an upper side of the sealing assembly 17 in the axial direction. An end surface of the terminal cap 27 on the upper side in the axial direction is exposed to the outside except for an outer edge portion thereof, and the exposed portion constitutes a positive electrode terminal. The sealing assembly 17 further has a metal plate 51. The metal plate 51 is a metallic annular member and has a through hole.

Each positive electrode tab 20 is bent along an upper surface of the upper current collecting plate 50 through the through hole 50a in the upper current collecting plate 50 from the positive electrode 11. A leading end portion of each positive electrode tab 20 is in a state of being sandwiched between the upper surface of the upper current collecting plate 50 and a lower surface of the metal plate 51. Each positive electrode tab 20 is joined to the upper surface of the upper current collecting plate 50. The upper current collecting plate 50 and the metal plate 51 are also joined to each other, and each positive electrode tab 20 and the metal plate 51 are also joined to each other. These joining operations can be performed, for example, by emitting laser light to the metal plate 51 in the axial direction from above to perform laser welding in a state in which the leading end portion of each positive electrode tab 20 is sandwiched between the upper current collecting plate 50 and the metal plate 51. By performing the laser welding in a state in which the leading end portions of the positive electrode tabs 20 are sandwiched between the upper current collecting plate 50 and the metal plate 51, the positive electrode tabs 20 can be securely and easily welded and joined to the upper current collecting plate 50.

The sealing assembly 17 has a laminating portion 60 in which the terminal cap 27 and the upper current collecting plate 50 are laminated on an outer circumferential edge portion. When the laser light is emitted to the laminating portion 60 from above, the terminal cap 27 and the upper current collecting plate 50 are laser-welded and electrically connected. The annular upper surface of the upper current collecting plate 50 has an annular recessed portion 65 inside the laminating portion 60 in the radial direction. Since the upper surface of the upper current collecting plate 50 has the recessed portion 65 recessed downward, a space is provided between the terminal cap 27 and the recessed portion 65 of the upper current collecting plate 50. Each positive electrode tab 20 is joined to the upper current collecting plate 50 in the recessed portion 65. The upper current collecting plate 50 need not be joined to the metal plate 51, and the positive electrode tabs 20 need not be joined to the metal plate 51. In addition, the battery need not have the metal plate 51. Alternatively, the positive electrode tabs 20 may be joined to the lower surface of the upper current collecting plate 50.

The battery 10 comprises a metallic lower current collecting plate 52 on a lower side of the electrode assembly 14 in the axial direction. With reference to FIGS. 1 and 2, by emitting laser light from a lower surface side of the lower current collecting plate 52 in a state in which the electrode assembly 14 is pressed against an upper surface of the lower current collecting plate 52 so as to tilt the elongated negative electrode core exposed portion 41 inward in the radial direction, the negative electrode core exposed portion 41 is laser-welded and joined to the upper surface of the lower current collecting plate 52 over a wide range. By emitting the laser light from a lower side of the housing can 16, the bottom 68 of the housing can 16 is laser-welded and joined to the lower current collecting plate 52. Thus, the negative electrode 12 of the electrode assembly 14 is electrically connected to the housing can 16 via the lower current collecting plate 52. By joining the negative electrode core exposed portion 41 to the upper surface of the lower current collecting plate 52 over the wide range, the current can be prevented from flowing for a long distance along the negative electrode longitudinal direction of the elongated negative electrode 12, and an electrical resistance of the battery 10 can be reduced.

A case has been described where the negative electrode core exposed portion 41 is electrically connected to the housing can 16 via the lower current collecting plate 52. However, the negative electrode may have a first negative electrode core exposed portion from which the negative electrode core is exposed on a winding inner side end portion in the negative electrode longitudinal direction, and may have a second negative electrode core exposed portion from which the negative electrode core is exposed on a winding outer side end portion in the negative electrode longitudinal direction. In addition, the second negative electrode core exposed portion may have an outermost circumferential surface portion included in an outermost circumferential surface of the electrode assembly. One end portion of a negative electrode lead may be joined to the first negative electrode core exposed portion and the other end portion of the negative electrode lead may be joined to a bottom inner surface of the housing can. The above-described outermost circumferential surface portion may contact an inner circumferential surface of the housing can.

Alternatively, two negative electrode leads are joined to the electrode assembly, one end portion of one of the two negative electrode leads may be electrically connected to the winding inner side end portion in the negative electrode core in the negative electrode longitudinal direction, and one end portion of the other of the two negative electrode leads may be electrically connected to the winding outer side end portion in the negative electrode core in the negative electrode longitudinal direction. Then, the other end portion of each negative electrode lead may be electrically connected to the bottom of the housing can. Alternatively, the negative electrode and the housing can may be electrically connected each other via one negative electrode tab.

The housing can 16 has a cylindrical portion 39, and a bottom 68, and the cylindrical portion 39 includes an annular grooved portion 22, and an annular shoulder portion 29. The grooved portion 22 is formed by recessing a part of the cylindrical portion 39 inward in the radial direction over the entire circumference in the circumferential direction by a spinning process. The sealing assembly 17 is disposed above the grooved portion 22, and is crimp-fixed to the opening portion of the housing can 16 via the resin gasket 28. The shoulder portion 29 is formed when an upper end portion of the cylindrical portion 39 is bent inward in the radial direction and is crimped to an outer edge portion of the sealing assembly 17, and extends inward in the radial direction in the upper end portion of the cylindrical portion 39.

By sealing a gap between the housing can 16 and the sealing assembly 17 with the annular gasket 28, an internal space of the battery 10 is sealed. The gasket 28 is sandwiched between the housing can 16 and the sealing assembly 17, and insulates the sealing assembly 17 from the housing can 16. The gasket 28 has a role of a seal material for maintaining the airtightness of the inside of the battery, and a role as an insulating material for insulating the sealing assembly 17 from the housing can 16. The terminal cap 27 electrically connected to the positive electrode tabs 20 serve s as the positive electrode terminal, and the housing can 16 electrically connected to the negative electrode core exposed portion 41 via the lower current collecting plate 52 serves as a negative electrode terminal.

The battery 10 has a thin easy rupture portion 68a in the bottom 68 of the housing can 16. The easy rupture portion 68a is formed by, for example, stamping a circular or C-shaped mark on a lower surface of the bottom 68. When the easy rupture portion 68a is provided in the bottom 68, the easy rupture portion 68a ruptures if abnormal heat generation has occurred in the battery 10, so that high-temperature gas in the battery 10 can be discharged to the outside, and the safety of the battery 10 can be increased. The thin easy rupture portion may be provided in the terminal cap.

Next, a joining structure in which the positive electrode tab 20 is joined to the positive electrode core exposed portion 35 will be described in detail with reference to FIG. 4. FIG. 4 is an enlarged view around one positive electrode core exposed portion in FIG. 3. As illustrated in FIG. 4, a longitudinally extending edge 37a that extends substantially in parallel to the positive electrode longitudinal direction is included in an edge 37 in the positive electrode core exposed portion 35 that is adjacent to the positive electrode mixture layer 32 in the positive electrode width direction.

Regarding at least one of the positive electrode core exposed portions 35 to which the respective positive electrode tabs 20 is joined, when an elongation rate of the longitudinally extending edge 37a in the positive electrode longitudinal direction after 100 charge and discharge cycles are performed from a reference point of time is defined as x%, a distance in the positive electrode width direction between the positive electrode tab 20 and the longitudinally extending edge 37a is defined as a mm, and a maximum length of the positive electrode core exposed portion 35 in the positive electrode width direction is defined as b mm, x ≥ 1% and a/b ≥ 2 - 3/(2x) holds.

The above-described reference point of time may refer to any point of time after the cylindrical secondary battery is manufactured, and may be, for example, a point of time before a person uses a battery purchased after shipping, a point of time before a battery after manufacturing is preliminarily charged, or a point of time after preliminary charging of a battery to be performed after manufacturing and before shipping is completed. In addition, the above-described cycle is defined as the charge and discharge cycle in which the temperature of the cylindrical secondary battery is set within the temperature range of 20°C to 45°C, OCV (voltage in a state in which a current does not flow in the battery) during charging is greater than or equal to 4.1 V, and the OCV during discharging is less than or equal to 3.5 V. Regarding the positive electrode core exposed portion 35 to which the positive electrode tab 20 joined to the winding outer side than the number of turns which is 0.35 times the total number of turns of the positive electrode 11 from the winding inner end of the positive electrode 11 is joined, preferably x ≥ 1% and a/b ≥ 2 - 3/(2x) is preferably established.

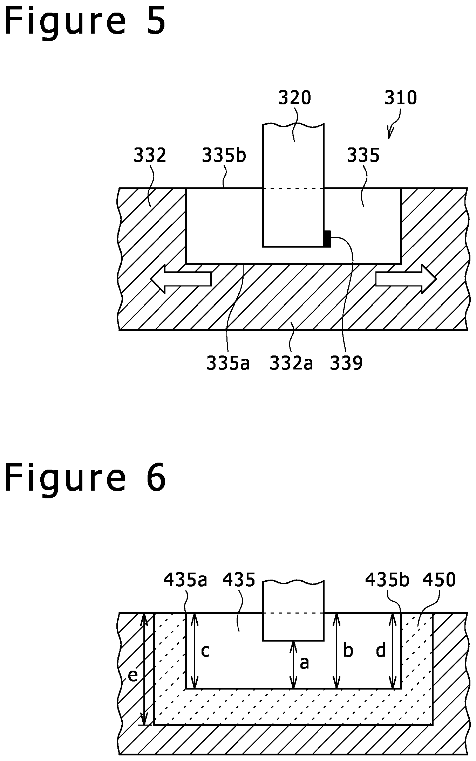

Next, advantageous effects of the battery 10 of the present disclosure will be described. FIG. 5 is an enlarged view corresponding to FIG. 4 in a cylindrical secondary battery 310 of a reference example. As illustrated in FIG. 5, in a configuration in which a positive electrode mixture layer 332 includes an adjacent mixture layer 332a adjacent, in a positive electrode width direction, to a positive electrode core exposed portion 335 to which a positive electrode tab 320 is joined, during charging, the positive electrode mixture layer 332 is expanded in a positive electrode longitudinal direction to follow expansion of a negative electrode mixture layer, which faces the positive electrode mixture layer 332 in the radial direction, in a negative electrode longitudinal direction, whereas the positive electrode core exposed portion 335 is not expanded in the positive electrode longitudinal direction.

Accordingly, the elongation rate of the positive electrode core exposed portion 335 in the positive electrode longitudinal direction is maximized at an edge 335a that contacts the adjacent mixture layer 332a in the positive electrode width direction, is gradually reduced as it is farther away from the adjacent mixture layer 332a in the positive electrode width direction, and is minimized at an edge 335b opposite to the adjacent mixture layer 332a side in the positive electrode width direction.

Therefore, when the leading end side of the positive electrode tab 320 is joined to a proximity region of the adjacent mixture layer 332a as in the battery 310 of the reference example, an excessive stress in the positive electrode longitudinal direction easily acts on the proximity region where an elongation in the positive electrode longitudinal direction is inhibited by joining of the positive electrode tab 320. Then, damage is easily caused in the positive electrode core exposed portion 335 around a corner 339 in the joining portion in the positive electrode core exposed portion 335 to which the positive electrode tab 320 is joined and at the positive electrode mixture layer 332 side in the positive electrode width direction.

In contrast, as illustrated in FIG. 4, in the battery 10 of the present disclosure, the positive electrode tab 20 is joined to only a range satisfying a/b ≥ 2 - 3/(2x), and is unlikely to be joined to a region where the elongation rate of the positive electrode core exposed portion 35 in the positive electrode longitudinal direction is large. For example, when x is 1%, a/b ≥ 0.5, so that the positive electrode tab 20 can be joined to only an upper side than a half of a positive electrode width directional range of the positive electrode core exposed portion 35. Accordingly, the battery 10 can be produced in which the capacity is easily increased, the positive electrode core exposed portion 35 is unlikely to be damaged, and the reliability is high.

The present inventors have investigated the elongation rate of the longitudinally extending edge 37a in the positive electrode longitudinal direction and the presence or absence of a foil break in the positive electrode core after the 100 charge and discharge cycles with respect to 10 samples for each of cylindrical secondary batteries of Examples 1 to 7 and Comparative Examples 1 to 5 among which various dimensions of the positive electrode core exposed portion, a dimension of a region where the insulating tape is attached, and a dimension of a region in the positive electrode core exposed portion to which the positive electrode tab is joined are different.

### <Cylindrical Secondary Batteries of Examples 1 to 7 and Comparative Examples 1 to 5>

Referring to FIG. 6, the cylindrical secondary batteries of Examples 1 to 7 and Comparative Examples 1 to 5 were produced, among which in the above-described a mm and b mm, a length c mm of a positive electrode core exposed portion 435 at a winding inner side end 435a in the positive electrode width direction, a length d mm of the positive electrode core exposed portion 435 at a winding outer side end 435b in the positive electrode width direction, and a maximum length e mm of a rectangular insulating tape 450 in the positive electrode width direction that was attached to cover the whole area of the positive electrode core exposed portion 435 were different. In the cylindrical secondary battery described using FIGS. 1 to 4, each cylindrical secondary battery was produced by varying a, b, c, d, and e. Each dimension of the cylindrical secondary batteries of Examples 1 to 7 and Comparative Examples 1 to 5 is shown in the following Table 1.

### <Measurement of Elongation Rate x of Positive Electrode Core>

In each battery of Examples 1 to 7 and Comparative Examples 1 to 5, a charge and discharge cycle in which the temperature of the cylindrical secondary battery was set within the temperature range of 20°C to 45°C, OCV (voltage in a state in which a current does not flow in the battery) during charging was greater than or equal to 4.1 V, and the OCV during discharging was less than or equal to 3.5 V was repeated 100 cycles. More specifically, the charge and discharge cycle in which a constant voltage charging was performed until a current value reached 0.02 C at a voltage of 4.2 V after the voltage reached 4.2 V at the constant current of 0.3 C under an environment of 45°C air cooling, and then a constant current discharging was performed until a battery voltage reached 2.85 V at the constant current of 0.5 C was repeated 100 cycles. The elongation rate x of the positive electrode core was calculated by measuring the length of the above-described longitudinally extending edge using computed tomography (CT) images showing a cross section in a round slicing direction which is perpendicular to the axial direction of the electrode assembly before and after 100 charge and discharge cycles. The elongation rate x of the positive electrode core of each cylindrical secondary battery of Examples 1 to 7 and Comparative Examples 1 to 5 is shown in the following Table 1.

The elongation rate x of the positive electrode core can be adjusted with high accuracy, for example, by adjusting an average crystal particle diameter of aluminum of an aluminum foil constituting the positive electrode core. The average crystal particle diameter of the aluminum can be adjusted with high accuracy by adjusting a heat treatment temperature of the positive electrode core or by adjusting impurities mixed into a constituent material of the positive electrode core. The elongation rate of the longitudinally extending edge can be specified by actually performing the 100 charge and discharge cycles when the material of the positive electrode core and the material of the positive electrode mixture layer are determined.

### <Check of Presence or Absence of Break in Positive Electrode Core>

After the above-described 100 charge and discharge cycles were performed, the presence or absence of foil break in the positive electrode core was visually checked on the basis of a CT image around the lower end of the positive electrode tab which is a CT image showing a cross section in a round slicing direction which was perpendicular to the axial direction of the electrode assembly. Among 10 samples for each battery, the ratio of the number of samples in which foil break of the positive electrode core occurred was specified. The ratio is shown in Table 1.

**[Table 1]**

| | Elongation rate of positive electrode [%] | 2-3/(2x) | a/b | c/b | d/b | e/b | Break in positive electrode core [ratio] |
|---|---|---|---|---|---|---|---|
| Example 1 | 1.00 | 0.50 | 0.70 | 1.00 | 1.00 | 1.20 | 0/10 |
| Example 2 | 1.00 | 0.50 | 0.55 | 1.00 | 1.00 | 1.20 | 0/10 |
| Example 3 | 1.00 | 0.50 | 0.70 | 0.50 | 0.50 | 1.20 | 1/10 |
| Example 4 | 1.00 | 0.50 | 0.70 | 0.70 | 0.70 | 1.20 | 1/10 |
| Example 5 | 1.00 | 0.50 | 0.70 | 1.00 | 1.00 | 1.50 | 0/10 |
| Example 6 | 1.00 | 0.50 | 0.70 | 1.00 | 1.00 | 1.70 | 0/10 |
| Example 7 | 1.125 | 0.67 | 0.70 | 1.00 | 1.00 | 1.20 | 2/10 |
| Comparative Example 1 | 1.00 | 0.50 | 0.45 | 1.00 | 1.00 | 1.20 | 8/10 |
| Comparative Example 2 | 1.00 | 0.50 | 0.30 | 1.00 | 1.00 | 1.20 | 6/10 |
| Comparative Example 3 | 1.00 | 0.50 | 0.10 | 1.00 | 1.00 | 1.20 | 7/10 |
| Comparative Example 4 | 1.125 | 0.67 | 0.55 | 1.00 | 1.00 | 1.20 | 6/10 |
| Comparative Example 5 | 1.25 | 0.80 | 0.70 | 1.00 | 1.00 | 1.50 | 7/10 |

As shown in Table 1, in the batteries of Examples 1 to 7 in which break hardly occurred in the positive electrode core, it could be checked that x was greater than or equal to 1% and all values of a/b were larger than 2 - 3/(2x). On the other hand, in the batteries of Comparative Examples 1 to 5 in which break frequently occurred in the positive electrode core, it could be checked that all values of a/b were smaller than 2 - 3/(2x). Accordingly, when the battery satisfying a/b ≥ 2 - 3/(2x) is produced, the capacity is easily increased, and the damage is unlikely to be caused.

In the batteries with a large diameter in which the overall length of the positive electrode in the longitudinal direction is greater than or equal to 3000 mm, and the batteries with a large diameter comprising six or more positive electrode core exposed portions (six or more positive electrode tabs) that are joined at an interval in the positive electrode longitudinal direction, the negative electrode is easily elongated in the negative electrode longitudinal direction during charging, and following this, the positive electrode is also easily elongated in the positive electrode longitudinal direction. Accordingly, the damage reduction effect of the positive electrode core obtained by adopting this configuration of the battery of the present disclosure is easily remarkable.

When the mass ratio of an Si element in the negative electrode mixture layer is greater than or equal to 5 mass%, the expansion of the negative electrode is increased during charging. Accordingly, also in this case, the damage reduction effect of the positive electrode core obtained by adopting this configuration of the battery of the present disclosure is easily remarkable.

The elongation of the positive electrode does not occur uniformly in the positive electrode longitudinal direction, and is increased on the winding outer side having a space allowing the elongation of the positive electrode which is larger than that on the winding inner side. Accordingly, the damage of the positive electrode core easily occurs on the winding outer side. Therefore, regarding the positive electrode core exposed portion to which the positive electrode tab joined to the winding outer side than the number of turns which is 0.35 times the total number of turns of the positive electrode from the winding inner end of the positive electrode is joined, x ≥ 1% and a/b ≥ 2 - 3/(2x) holds, so that the damage to the positive electrode core can be effectively reduced.

The present disclosure is not limited to the above embodiment and modifications thereof, and various improvements and changes are possible within the matters described in the claims of the present application and the scope of equivalence of claims.

For example, in the above-described embodiment, a case has been described where the positive electrode core exposed portion 35 has a rectangular shape. However, as in the above-described batteries of Examples 3 and 4, even when the positive electrode core exposed portion has the maximum length in the positive electrode width direction that is longer than the length in the positive electrode width direction at at least one end in the positive electrode longitudinal direction, the damage to the positive electrode core can be effectively reduced.

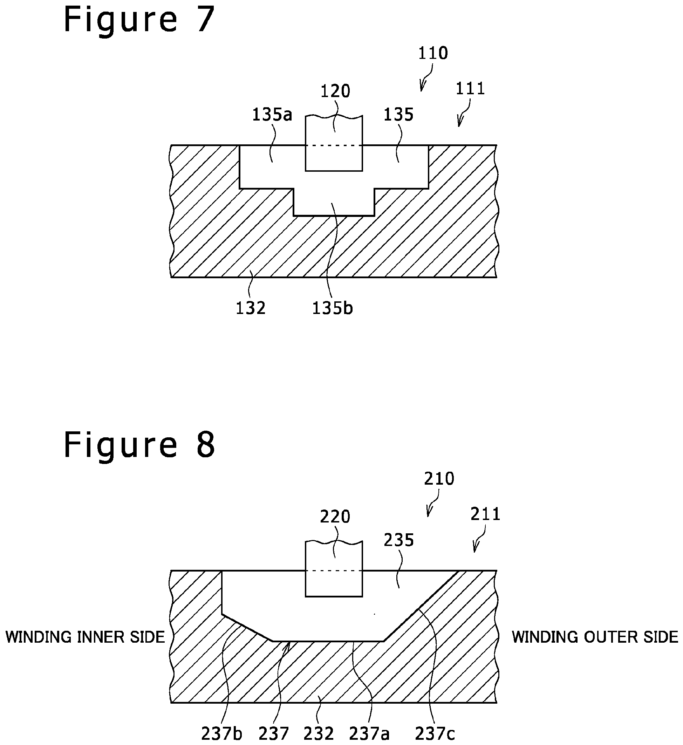

For example, as illustrated in FIG. 7, that is, the enlarged view corresponding to FIG. 4 in a cylindrical secondary battery 110 of the first modification, the positive electrode core exposed portion 135 of the positive electrode 111 may have a rectangular first region 135a, and a rectangular second region 135b projecting downward (toward a can bottom side) from the center portion of the first region 135a in the longitudinal direction having a width in the longitudinal direction which is larger than a width of the positive electrode tab 120. Then, a boundary between the positive electrode core exposed portion 135 and the positive electrode mixture layer 132 may have a stepwise shape.

In addition, as illustrated in FIG. 8, that is, the enlarged view corresponding to FIG. 4 in a cylindrical secondary battery 210 of the second modification, an edge (boundary) 237 between a positive electrode mixture layer 232 and a core exposed portion 235 to which a positive electrode tab 220 is joined in a positive electrode 211 may include at least one of a inclined edge 237b inclined upward (toward the sealing assembly side) as it approaches the winding inner side in the positive electrode longitudinal direction and an inclined edge 237c inclined upward (toward the sealing assembly side) as it approaches the winding outer side in the positive electrode longitudinal direction, in addition to the longitudinally extending edge 237a extending substantially in parallel to the positive electrode longitudinal direction.

Thus, the cylindrical battery may comprise one or more positive electrode core exposed portions having the maximum length in the positive electrode width direction in the range in the positive electrode longitudinal direction to which the positive electrode tab is joined that is longer than the length in the positive electrode width direction at at least one end of both ends in the positive electrode longitudinal direction. According to the batteries of these modifications, the coating region of the positive electrode mixture layer 132, 232 can be increased, so that the capacity of the battery can be increased.

The cylindrical secondary battery of the present disclosure may have the following configurations.

Configuration 1: A cylindrical secondary battery comprising: an electrode assembly of an elongated positive electrode and an elongated negative electrode that are wound with a separator interposed between the positive electrode and the negative electrode; a housing can that houses the electrode assembly; and a sealing assembly that is crimp-fixed to an opening portion of the housing can via a gasket, wherein the positive electrode has an elongated positive electrode core, and a positive electrode mixture layer disposed on the positive electrode core, the negative electrode has an elongated negative electrode core, and a negative electrode mixture layer disposed on the negative electrode core, the positive electrode has one or more positive electrode core exposed portions, the positive electrode core exposed portions each being adjacent to the positive electrode mixture layer in a positive electrode width direction and exposing the positive electrode core, one positive electrode tab is joined to each of the positive electrode core exposed portions, a longitudinally extending edge that extends substantially in parallel to a positive electrode longitudinal direction is included in an edge of each of the positive electrode core exposed portions that is adjacent to the positive electrode mixture layer in the positive electrode width direction, and regarding at least one of the positive electrode core exposed portions, when an elongation rate of the longitudinally extending edge in the positive electrode longitudinal direction after 100 charge and discharge cycles are performed from a reference point of time is defined as x%, a distance in the positive electrode width direction between the positive electrode tab and the longitudinally extending edge is defined as a mm, and a maximum length of the positive electrode core exposed portion in the positive electrode width direction is defined as b mm, x ≥ 1%, and a/b ≥ 2 - 3/(2x) holds.

Configuration 2: The cylindrical secondary battery described in Configuration 1, wherein a plurality of the positive electrode core exposed portions are arranged at an interval in the positive electrode longitudinal direction.

Configuration 3: The cylindrical secondary battery described in Configuration 1 or 2, wherein regarding the positive electrode core exposed portion to which the positive electrode tab joined to a winding outer side than the number of turns which is 0.35 times a total number of turns of the positive electrode from a winding inner end of the positive electrode is joined, a/b ≥ 2 - 3/(2x) holds.

Configuration 4: The cylindrical secondary battery described in any one of Configurations 1 to 3, wherein a length of the positive electrode in the positive electrode longitudinal direction is greater than or equal to 3000 mm.

Configuration 5: The cylindrical secondary battery described in any one of Configurations 1 to 4, further comprising six or more of the positive electrode core exposed portions that are arranged at an interval in the positive electrode longitudinal direction.

Configuration 6: The cylindrical secondary battery described in any one of Configurations 1 to 5, wherein a mass ratio of an Si element in the negative electrode mixture layer is greater than or equal to 5 mass%.

Configuration 7: The cylindrical secondary battery described in any one of Configurations 1 to 6, further comprising one or more of the positive electrode core exposed portions having a maximum length in the positive electrode width direction in a range in the positive electrode longitudinal direction to which the positive electrode tab is joined that is longer than a length in the positive electrode width direction at at least one end of both ends in the positive electrode longitudinal direction.

### REFERENCE SIGNS LIST

10, 110, 210 Battery, 11, 111, 211 Positive electrode, 12 Negative electrode, 13 Separator, 14 Electrode assembly, 15 Winding inner surface, 16 Housing can, 17 Sealing assembly, 18 Insulating plate, 20, 120, 220 Positive electrode tab, 22 Grooved portion, 27 Terminal cap, 28 Gasket, 29 Shoulder portion, 30 Positive electrode core, 32, 132, 232 Positive electrode mixture layer, 32a Adjacent mixture layer, 35, 135, 235 Core exposed portion, 37a, 237a, Longitudinally extending edge, 39 Cylindrical portion, 40 Negative electrode core, 41 Negative electrode core exposed portion, 42 Negative electrode mixture layer, 50 Upper current collecting plate, 50a Through hole, 51 Metal plate, 52 Lower current collecting plate, 60 Laminating portion, 65 Recessed portion, 68 Bottom, 68a Easy rupture portion, 135a First region, 135b Second region, 237b, 237c Inclined edge.

## Claims

1. A cylindrical secondary battery comprising:
an electrode assembly of an elongated positive electrode and an elongated negative electrode that are wound with a separator interposed between the positive electrode and the negative electrode;
a housing can that houses the electrode assembly; and
a sealing assembly that is crimp-fixed to an opening portion of the housing can via a gasket, wherein
the positive electrode has an elongated positive electrode core, and a positive electrode mixture layer disposed on the positive electrode core,
the negative electrode has an elongated negative electrode core, and a negative electrode mixture layer disposed on the negative electrode core,
the positive electrode has one or more positive electrode core exposed portions, the positive electrode core exposed portions each being adjacent to the positive electrode mixture layer in a positive electrode width direction and exposing the positive electrode core,
one positive electrode tab is joined to each of the positive electrode core exposed portions,
a longitudinally extending edge that extends substantially in parallel to a positive electrode longitudinal direction is included in an edge of each of the positive electrode core exposed portions that is adjacent to the positive electrode mixture layer in the positive electrode width direction, and
regarding at least one of the positive electrode core exposed portions, when an elongation rate of the longitudinally extending edge in the positive electrode longitudinal direction after 100 charge and discharge cycles are performed from a reference point of time is defined as x%, a distance in the positive electrode width direction between the positive electrode tab and the longitudinally extending edge is defined as a mm, and a maximum length of the positive electrode core exposed portion in the positive electrode width direction is defined as b mm, $x \geq 1 % ,$ and $a / b \geq 2 - 3 / \left(2x\right)$ holds.

2. The cylindrical secondary battery according to claim 1, wherein
a plurality of the positive electrode core exposed portions are arranged at an interval in the positive electrode longitudinal direction.

3. The cylindrical secondary battery according to claim 1, wherein regarding the positive electrode core exposed portion to which the positive electrode tab joined to a winding outer side than the number of turns which is 0.35 times a total number of turns of the positive electrode from a winding inner end of the positive electrode is joined, a/b ≥ 2 - 3/(2x) holds.

4. The cylindrical secondary battery according to claim 1, wherein a length of the positive electrode in the positive electrode longitudinal direction is greater than or equal to 3000 mm.

5. The cylindrical secondary battery according to claim 1, further comprising six or more of the positive electrode core exposed portions that are arranged at an interval in the positive electrode longitudinal direction.

6. The cylindrical secondary battery according to claim 1, wherein a mass ratio of an Si element in the negative electrode mixture layer is greater than or equal to 5 mass%.

7. The cylindrical secondary battery according to claim 1, further comprising one or more of the positive electrode core exposed portions having a maximum length in the positive electrode width direction in a range in the positive electrode longitudinal direction to which the positive electrode tab is joined that is longer than a length in the positive electrode width direction at at least one end of both ends in the positive electrode longitudinal direction.
